Europäisches Patentamt

European Patent Office

Office européen des brevets

(11) Veröffentlichungsnummer: **0 184 677**
**B1**

(12) **EUROPÄISCHE PATENTSCHRIFT**

(45) Veröffentlichungstag der Patentschrift:
27.09.89

(51) Int. Cl.⁴: **C 01 G 43/025, C 01 G 56/00**

(21) Anmeldenummer: **85114330.5**

(22) Anmeldetag: **11.11.85**

(54) **Verfahren zum Gewinnen von Uran und/oder Plutonium aus salpeter- oder schwefelsauerer Lösung.**

(30) Priorität: **22.11.84 DE 3442642**

(43) Veröffentlichungstag der Anmeldung:
**18.06.86 Patentblatt 86/25**

(45) Bekanntmachung des Hinweises auf die Patenterteilung:
**27.09.89 Patentblatt 89/39**

(84) Benannte Vertragsstaaten:
**DE FR GB IT**

(56) Entgegenhaltungen:
**EP-A- 0 098 510**
**EP-A- 0 112 500**
**DE-A- 1 803 114**
**DE-B- 1 215 266**
**FR-A- 2 070 218**
**GB-A- 1 193 491**

(73) Patentinhaber: **Siemens Aktiengesellschaft,
Wittelsbacherplatz 2, D-8000 München 2 (DE)**

(72) Erfinder: **Link, Karl-Rupprecht, Dr., verstorben (DE)**
Erfinder: **Ledebrink, Friedrich-Wilhelm, Dr., Hanauer
Strasse 22, D-6451 Neuberg 1 (DE)**

## Beschreibung

Die Erfindung betrifft ein Verfahren zum Gewinnen von Uran und/oder Plutonium aus salpeter- oder schwefelsaurer Lösung durch Ausfällen mit kationischen Tensiden und Abtrennen und Weiterverarbeiten des ausgefällten Tensidniederschlages.

Ein solches Verfahren ist aus der deutschen Offenlegungsschrift 32 24 803 bekannt. Bei diesem bekannten Verfahren wird der aus einer chemischen Verbindung zwischen dem kationischen Tensid und den anionischen Nitrato- oder Sulfatokomplexen des Urans oder Plutoniums bestehende Niederschlag entweder abfiltriert oder durch Flotation in Form von Schaum abgetrennt. Der Filterkuchen bzw. der Schaum wird weitgehend entwässert und anschließend in wenig Wasser wieder suspendiert. Durch Erwärmen der Suspension wird der Niederschlag wieder aufgelöst. Durch Erhöhung des pH-Wertes der Lösung wird sodann $Pu^{4+}$ bzw. $UO_2^{2+}$ als Pu(IV)-Hydroxid bzw. Uranat ausgefällt. Der ausgefällte Niederschlag aus Pu(IV)-Hydroxid bzw. Uranat wird abgetrennt und steht zur Weiterverarbeitung zur Verfügung.

Der Niederschlag aus Pu(IV)-Hydroxid $Pu(OH)_4.x$ $H_2O$ bzw. Uranat ist jedoch gallertartig und kann daher zumindest durch einfache Abtrennverfahren wie z.B. Abfiltrieren wegen Verstopfen des Filters nicht befriedigend abgetrennt und anschließend zu Plutonium- und Uranoxiden weiterverarbeitet werden, die als Kernbrennstoff in Kernreaktorbrennelementen üblicherweise eingesetzt werden.

Der Erfindung liegt die Aufgabe zugrunde, das Weiterverarbeiten von ausgefällten uran- und/oder plutoniumhaltigen Tensidverbindungen zu Uran- und/oder Plutoniumoxid zu vereinfachen.

Zur Lösung dieser Aufgabe ist ein Verfahren der eingangs erwähnten Art erfindungsgemäß dadurch gekennzeichnet, daß der ausgefällte Niederschlag zu Uran- und/oder Plutoniumoxid verascht wird.

Das erwünschte Uran- und/oder Plutoniumoxid wird auf diese Weise aus dem Tensidniederschlag durch einen einzigen Verfahrensschritt gewonnen.

Um Verpuffungen des Tensidniederschlages beim Veraschen zu vermeiden, ist es günstig, wenn die Oberfläche dieses Tensidniederschlages vor dem Veraschen durch Kompaktieren verringert wird. Aus demselben Grunde kann es auch vorteilhaft sein, wenn der Tensidniederschlag vor dem Veraschen mit Zusatzstoffen durchsetzt wird, die das Veraschen des Niederschlages verzögern. Vorteilhafte Zusatzstoffe sind Uranoxid-, Plutoniumoxid- und/oder Kohlenstoffpulver. Auch kann der Tensidniederschlag günstigerweise in so geringen Portionen verascht werden, daß eine Verpuffung vermieden wird.

Die Erfindung und ihre Vorteile seien anhand eines Ausführungsbeispiels näher erläutert:

Zum Ausfällen von Uran oder Plutonium aus salpeter- oder schwefelsaurer Lösung geeignete Tenside sind langkettige Alkylpyridiniumsalze, Alkylamine oder deren Salze, Alkyldimethylnaphtylammoniumsalze, alkylierte Arylamine oder deren Salze, alkyliertes Morpholin oder dessen Salze, oxalkyliertes Pyridin oder dessen Salze, alkyliertes Chinolin oder dessen Salze oder Gemische dieser Verbindungen. Günstigerweise haben die langkettigen Alkylreste dieser Tenside gerade oder verzweigte Ketten von 4 bis 24 Kohlenstoffatomen.

Aus dieser Gruppe von Tensiden wird Cetyl-Pyridinium-Nitrat zum Fällen von Pu(IV) aus einer 6-molaren salpetersauren Lösung ausgewählt. In dieser 6-molaren salpetersauren Pu(IV)-Lösung befindet sich 0,1 Mol Pu. Dieser Lösung wird 0,22 Mol Cetyl-Pyridinium-Nitrat als klare, wäßrige Lösung zugesetzt. Beim Vermischen durch Umrühren entsteht ein grünlicher Tensidniederschlag aus Di-Cetyl-Pyridinium-Pu(IV)-Hexanitrat $(C_{21}H_{38}N)_2$ $Pu$ $(NO_3)_6$, der abfiltriert wird.

Dieser abfiltrierte Tensidniederschlag wird mit $UO_2$-Pulver, das eine mittlere Korngröße von etwa 15 µm hat, im Gewichtsverhältnis 1:5 verknetet. Die resultierende Masse wird mit einem Werkzeug zu Kugeln mit einem Gewicht von etwa 1g pro Kugel kompaktiert. Diese Kugeln werden mit Hilfe einer Dosiervorrichtung einzeln und eine nach der anderen in gleichen Zeitabständen von 15 Sekunden in einen Veraschungsofen eingefüllt, in dem sich jede Kugel in Gegenwart von Luft verzögert innerhalb von 15 Sekunden auf eine Veraschungstemperatur zwischen 500° und 1000 °C aufheizt und verpuffungsfrei verascht, da die exotherme Zersetzung des Di-Cetyl-Pyridinium-Pu(IV)-Hexanitrates in der Kugel im Veraschungsofen abgeschlossen ist, wenn die nächste Kugel in den Veraschungsofen gegeben wird. Als Rückstand verbleiben im Veraschungsofen Uran- und Plutoniumoxid sowie Kohlenstoff, der mit der Luft in Kohlendioxidgas überführt wird, so daß reines Uran- und Plutoniumoxid dem Veraschungsofen entnommen werden kann.

## Patentansprüche

1. Verfahren zum Gewinnen von Uran und/oder Plutonium aus salpeter- oder schwefelsaurer Lösung durch Ausfällen mit kationischen Tensiden und Abtrennen und Weiterverarbeiten des ausgefällten Tensidniederschlages, dadurch gekennzeichnet, daß der ausgefällte Tensidniederschlag zu Uran- und/oder Plutoniumoxid verascht wird.

2. Verfahren nach Anspruch 1, dadurch gekennzeichnet, daß die Oberfläche des Tensidniederschlages vor dem Veraschen durch Kompaktieren verringert wird.

3. Verfahren nach Anspruch 1, dadurch gekennzeichnet, daß der Tensidniederschlag vor dem Veraschen mit Zusatzstoffen durchsetzt wird, die die Veraschung des Niederschlages verzögern.

4. Verfahren nach Anspruch 3, dadurch gekennzeichnet, daß der Tensidniederschlag mit Uranoxid, Plutoniumoxid- und/oder Kohlenstoffpulver durchsetzt wird.

5. Verfahren nach Anspruch 1, dadurch gekennzeichnet, daß der Tensidniederschlag sukzessive in so geringen Portionen verascht wird, daß eine Verpuffung vermieden wird.

## Revendications

Procédé d'obtention d'uranium et/ou de plutonium à partir d'une solution d'acide nitrique ou d'acide sulfurique, par précipitation par des agents tensio-actifs cationiques et séparation et transformation du précipité d'agent tensio-actif formé, caractérisé en ce qu'il consiste à réduire le précipité d'agent tensio-actif en cendres d'oxyde d'uranium et/ou d'oxyde de plutonium.

2. Procédé suivant la revendication 1, caractérisé en ce qu'il consiste à diminuer la surface du précipité d'agent tensio-actif par compactage avant la réduction en cendres.

3. Procédé suivant la revendication 1, caractérisé en ce qu'il consiste à mélanger l'agent tensio-actif, avant la réduction en cendres, à des additifs qui ralentissent la réduction en cendres du précipité.

4. Procédé suivant la revendication 3, caractérisé en ce qu'il consiste à mélanger le précipité d'agent tensio-actif à de l'oxyde d'uranium, à de la poudre d'oxyde de plutonium et/ou à de la poudre de carbone.

5. Procédé suivant la revendication 1, caractérisé en ce qu'il consiste à réduire en cendres le précipité d'agent tensio-actif successivement en des portions si petites que toute décrépitation est empêchée.

## Claims

1. Method for the obtaining of uranium and/or plutonium from nitric or sulphuric solution by precipitation with cationic surfactants and separation and further processing of the precipitated sufactant deposit, characterised in that the precipitated surfactant deposit is incinerated to form uranium and/or plutonium oxide.

2. Method according to claim 1, characterised in that the surface of the surfactant deposit is reduced before incineration by compacting.

3. Method according to claim 1, characterised in that the surfactant deposit is permeated before incineration by additional substances which delay the incineration of the deposit.

4. Method according to claim 3, characterised in that the surfactant deposit is permeated by uranium oxide, plutonium oxide and/or carbon powder.

5. Method according to claim 1, characterised in that the surfactant deposit is incinerated successively into such small portions that deflagration is avoided.